# EUROPEAN PATENT SPECIFICATION

(11) **EP 2 678 164 B1**
(45) Date of publication and mention of the grant of the patent: **03.01.2018**
(21) Application number: 12750033.8
(22) Date of filing: 15.02.2012
(51) Int. Cl.: B41J 2/435

(54) **POLYMER LASER MARKING**
POLYMERLASERMARKIERUNG
MARQUAGE AU LASER D'UN POLYMÈRE

(30) Priority: 22.02.2011 US 201113031903
(43) Date of publication of application: 01.01.2014
(73) Proprietor: FERRO CORPORATION, Mayfield Heights, OH 44124 (US)
(72) Inventor: SARVER, Joseph, E., Washington, PA 15301 (US); ROZWOOD, Stephen, Castle Shannon, PA 15234 (US); SAKOSKE, George, E., Washington, PA 15301 (US); WEIR, Sean, T., Bridgeville, PA 15017 (US); GILMORE, Dennis, R., Washington, PA 15301 (US)
(74) Representative: Gille Hrabal
(86) International application number: PCT/US2012/025150
(87) International publication number: WO 2012/115824

(56) References cited:
- EP-A1- 0 659 583
- EP-A1- 2 050 720
- EP-A2- 1 418 204
- WO-A2-2005/056696
- US-A- 5 691 757
- US-A1- 2004 034 142
- US-A1- 2010 003 520

## Description

### FIELD OF THE INVENTION

The present invention relates to embedding pigments into polymeric coatings and substrates using laser energy to form high contrast marks. The compositions and methods described herein are particularly useful for forming markings such as graphics, text, unique identification marks for traceability such as data matrix and bar codes, or numbering on plastic surfaces.

### BACKGROUND OF THE INVENTION

Various laser bonding technologies are known in which a composition containing a polymer component, one or more additives, and pigment, is applied to the surface of plastics and coatings in order to color the surface. Generally, such compositions are applied to a surface of interest and then irradiated with high intensity light, such as from a laser. It is believed that the additive assists in absorbing energy from the laser. This enables the polymeric component and pigment in these compositions to bond and/or adhere to the surface. Absorbers along with pigments are required for other known laser marking compositions and processes.

Prior art document EP 2 050 720 A1 discloses a pigment comprising a mixture and/or reaction products which include at least a bismuth- and/or antimony salt.

Prior art document WO 2005/056696 A2 teaches substrates with a surface modification by using dyes, which is characterized in being enveloped in one or several layers of immobilized LCST and/or UCST polymers.

Prior art document EP 1 418 204 A2 discloses laser-markable pigments which are distinguished by the fact that an absorber is coated with a marker and optionally with a diffusion barrier. The absorber according to this invention is an inorganic pigment or a filler.

Prior art document EP 0 659 583 A1 relates to a laser marking method, which comprises the following steps: 1) heating a base article having a thin film on its surface, which includes a laser marking composition containing a color former and a color developer having a melting point of 200°C or above, 2) applying laser light to the thin film.

Although satisfactory in many respects, the requisite use of such light absorbing additives typically increases the cost of the composition and limits application of the technology. Furthermore, since the pigment is dispersed within a polymer component and adhered to the surface of interest along with the polymer, the resulting visibility and contrast of any markings resulting from the pigment is typically reduced. Accordingly, a need exists for an improved composition and method which avoid the disadvantages associated with previously known practices.

### SUMMARY OF THE INVENTION

The difficulties and drawbacks associated with previously known compositions and methods are addressed in the present technology for laser marking.

In one aspect, the present invention provides a composition for forming marks or indicia of at least one coloring agent in particulate form encapsulated and retained in a polymeric surface upon laser irradiation. The composition comprises solvent, at least one coloring agent in particulate form; and at one agent selected from the group consisting of a surfactant, a dispersant, and combinations thereof. The composition is free of both (i) a light absorber or enhancer, and (ii) a polymeric carrier.

In another aspect, the present invention provides a composition consisting essentially of from about 35% to about 65% water, from about 2% to about 40% coloring agent, and from about 0.1% to about 35% of surfactant/dispersant.

In yet another aspect, the invention provides a method of forming a mark, indicia, text, or design on a polymeric surface. The method comprises providing a composition including solvent, at least one coloring agent in particulate selected from the group consisting of a surfactant, a dispersant, form; and at least one agent and combinations thereof. The method also comprises applying the composition to a polymeric surface to form a coating. And, the method additionally comprises irradiating at least a portion of the coating with laser light such that regions of the polymeric surface underlying the coating increase in temperature and at least partially encapsulate and retain the organic coloring agent, wherein irradiating does not thermal degradation of the coloring agent particles.

In still another aspect, the invention provides a method of forming a mark, indicia, text or design on a polymeric surface. The method comprises providing a composition including solvent, at least one coloring agent in particulate form, and at least one agent selected from the group consisting of a surfactant, a dispersant, and combinations thereof. The method also comprises providing a transfer member defining a first face, and an oppositely directed second face. And, the method comprises applying the composition to the first face of the transfer member to form a coating. The method additionally comprises drying the coating, and then contacting the dried coating to the surface to be marked. And the method further comprises irradiating at least a portion of the second face of the transfer member such that regions of the polymeric surface underlying the coating increase in temperature and at least partially encapsulate and retain the coloring agent.

In another aspect, the invention provides a method for forming markings or indicia on a polymeric surface. The method comprises providing a composition comprising (i) solvent, (ii) at least one coloring agent in particulate form, and (iii) at least one agent selected from the group consisting of a surfactant, a dispersant, and combinations thereof. The composition is free of both (a) a light absorber or enhancer, and (b) a polymeric carrier. The method also comprises forming a layer or coating of the composition on a surface of a polymeric material. The method also comprises directing light emitted from a laser onto the layer of the composition. The light is of a wavelength and energy level such that at least a portion of the light passes through the layer of the composition and penetrates into the polymeric material within at least a region underlying the layer of the composition thereby causing an increase in temperature of the polymeric material so that at least a portion of the coloring agent in the composition is adhered within the polymeric material.

In yet another aspect, the invention provides a composition adapted to form markings or indicia on a polymeric surface upon laser irradiation. The composition comprises (i) solvent, (ii) at least one agent selected from the group consisting of a surfactant, a dispersant, and combinations thereof, and (iii) functionalized pigment.

In yet another aspect, the present invention provides a method of forming in-situ, a dispersion of polymeric material and functionalized pigment particles. The method comprises providing a composition including functionalized pigment particles. The method also comprises forming a layer or coating of the composition on a surface of a polymeric material. And, the method also comprises directing light emitted from a laser onto the layer of the composition whereby at least a portion of the light passes through the layer of the composition and penetrates into the polymeric material within at least a region underlying the layer of the composition thereby causing an increase in temperature of the polymeric material. The functionalized pigment particles may thus in theory enhance the viscosity of the melted surface and aid in the migration of the pigment into the flowable portion of the polymeric surface, such that the polymeric material has a viscosity of from about 0.25 cps to about 50,000 cps to thereby form a flowable portion of the polymeric material. The method additionally comprises allowing at least a portion of the functionalized pigment particles to disperse within the flowable portion of the polymeric material to thereby form in-situ a dispersion of polymeric material and functionalized pigment particles.

As will be realized, the invention is capable of other and different embodiments and its several details are capable of modifications in various respects, all without departing from the invention. Accordingly, the description is to be regarded as illustrative and not restrictive.

### DETAILED DESCRIPTION OF THE EMBODIMENTS

The present invention provides methods and compositions for producing relatively high contrast laser marks and/or indicia in polymeric coatings and plastics by embedding pigments or other agents into a polymeric surface of the targeted plastics and coatings using laser energy.

The preferred embodiment laser marking composition comprises (i) water, (ii) one or more pigments and/or like coloring agents, and (iii) a surfactant or dispersant. In the event that pigment or the coloring agent is in the form of particles, the particles preferably have certain size characteristics. The composition is sprayed or otherwise applied on a surface of a coating or plastic, and irradiated with laser light or other energy source to thereby form markings in the surface. After formation of the desired marks or designs the remaining composition or "over-spray" is then optionally wiped away. More specifically, after application of the preferred embodiment composition and dispersion of the pigment upon the polymeric surface of interest, the composition and the polymeric surface are irradiated with high intensity light. Exposure to such light results in the pigment absorbing energy, increasing in temperature, and melting the underlying polymer to thereby encapsulate the pigment at least partially below the surface of the polymer.

Most previously known practices required a specific absorber or carrier to absorb light energy and assist in bonding the pigment to the surface of interest. In accordance with the present invention, the coloring agent serves as an absorber in the preferred embodiment compositions. Surprisingly, it has been discovered that certain pigments having a particular particle size can be used without absorbers, carriers, or other agents in a marking composition. Furthermore, the present invention does not require a polymeric carrier to bond the pigment to the surface or interest, i.e. the plastic substrate or polymeric coating. Although not wishing to be bound to any particular theory, it is believed that the dispersed pigment of relatively small particle size absorbs energy from exposure to the laser, melts the polymer of the surface to be marked and which underlies the pigment, and is thereby embedded into the plastic or polymeric coating of interest.

More specifically, the invention provides a composition that can be easily and conveniently applied, such as by spraying, onto a polymeric surface. After having deposited a coating or effective amount of the composition on the surface of interest, portions of the coated surface are irradiated with a laser. The laser heats the dispersed pigment particles and melts the underlying polymer of the surface to "encapsulate" or otherwise retain the pigment particles.

By use of the present invention, a relatively high contrast mark or other indicia can be formed by using a concentrated dispersion of pigment or like agent(s). Furthermore, in accordance with the invention, use of a laser to embed pigments or other agents into a polymeric surface of interest promotes increased contrast of the resulting marks or indicia.

For certain embodiments of the invention, the final pigment to binder ratio for the high contrast laser mark in these formulas will not apply since there is essentially no polymer carrier (binder). Most paints/plastics have a range of pigment to binder and the starting laser marking composition essentially has a pigment to binder ratio of infinity since there is no binder. At some point in the final fused laser mark the pigment/binder ratio far exceeds traditional paints and plastics which have lower ratios of pigment to binder because they must flow for application or forming.

The present invention eliminates the need for a polymer carrier that is typically utilized for bonding a pigment to a surface targeted for marking. Eliminating the polymer carrier also increases the compatibility of the preferred embodiment dispersions over a wide range of polymers.

Yet another advantage associated with the invention relates to how the pigment in the preferred compositions is retained in the surface undergoing marking. Embedding the pigment into a polymeric surface also results in at least partially encapsulating the pigment into the surface which thereby prevents the color from bleeding which could potentially occur upon exposure to solvents. Thus, the marks or designs formed in accordance with the invention exhibit relatively high durability and resistance to a host of environmental factors.

As noted, the preferred embodiment processes do not require an absorber or polymer carrier to bond the material to the surface. The pigment is dispersed in a non-polymeric system which increases the contrast of the resulting laser mark by eliminating the polymeric carrier when embedded by laser energy into a polymeric surface of interest. Use of the preferred methods and compositions eliminate the potential for incompatibility between the composition and the polymeric surface of interest. The present invention encompasses a wide array of pigment precursors, polymeric precursors, glass precursors, and particle precursors that may be embedded into a surface using laser energy.

Another feature of the invention is the provision of a composition and/or method that allows laser energy to partially pass through the pigment particle layer without absorbing too much energy (that would destroy the pigment) and then penetrate deep enough into the plastic/polymer layer below to melt and create a strong bond with the substrate.

Yet another feature of the invention is a laser markable composition that contains a functionalized pigment surface able to efficiently wet, flow, and bond to the heated low viscosity plastic layer below forming a durable high contrast mark.

Functionalized pigments in combination with the low viscosity polymer layer form a high pigment load plastic or paint in situ during the process.

### Composition

The preferred embodiment composition comprises (i) one or more coloring agent(s) which is preferably a colorant, pigment, or the like, (ii) at least one surfactant or dispersant, and (iii) solvent. The preferred compositions may also comprise additional components, however are generally free from light absorbers or other agents as known in conventional marking compositions, and free from polymeric carriers. These aspects are all described in greater detail herein.

Typical and preferred concentration ranges for the various components are as follows. The coloring agent typically constitutes from about 2% to about 40%, and preferably from about 2% to about 35% by weight of the composition. The surfactant or dispersant typically constitutes from about 0.1 % to about 35%, and preferably from about 0.1% to about 30% by weight of the composition. And, the composition generally comprises solvent typically in an amount of from about 35% to about 65%, and preferably from about 40% to about 60% by weight. The solvent is preferably water. All percentages noted herein are percentages by weight unless indicated otherwise.

As noted, the composition may comprise other agents such as viscosity adjusting agents, flow controllers, stabilizers, co-solvents such as alcohols, and clarity promoters to promote maintenance of optical characteristics of the composition.

For certain applications, it may be preferred to utilize a composition that includes a pigment having a functionalized surface. Such pigment is referred to herein as "functionalized pigment." Functionalized pigment exhibits an outer surface which is able to efficiently wet, flow, and bond to a heated low viscosity polymeric layer underlying a layer or coating of the composition. The ability of functionalized pigment to wet, flow, and bond to a heated polymeric surface enables formation of durable and high contrast markings in the polymeric surface. Typical examples of functionalized pigments include but are not limited to pigments with surface modifications by addition/synthesis of ionically charged groups, or addition/synthesis of polymer compatible/ surface friendly groups similar in chemistry to the polymer that is being laser marked. Preferred examples of functionalized pigments include pigments with cationic, anionic, rosinated, or organic metallic coupled groups on the surface. When utilizing a functionalized pigment, it is generally preferred that the weight ratio of pigment to flowable polymer (resulting from heating the polymeric surface by laser irradiation) is greater than 50. However, in no way is the invention limited to this particular feature.

The outer surface of pigment particles may be treated or processed to impart such functionality to the particles and thereby form the functionalized pigment. Although not wishing to be limited to any particular technique, one strategy for imparting such functionalization to the outer surface of pigment particles by various deposition techniques such as vapor deposition and others.

### Coloring Agent(s)

The coloring agent(s) may be nearly any pigment or combination of pigments. As will be appreciated by those skilled in the art, certain dyes could also be used for the coloring agent so long as the dye precipitated from the composition and formed particulates that would then become embedded within or below the surface of the substrate upon absorption of energy from laser irradiation. Nonlimiting examples of representative pigments for use in the invention include organic pigments, inorganic pigments, mica effect pigments, metallic effect pigments, and combinations thereof.

The coloring agent preferably includes phthalocyanines and/or diketopyrrolopyrrole (DPP) compounds. These pigments can be components of commercially pigment dispersions that may absorb laser energy thus becoming embedded into the polymer. Non-limiting examples of suitable phthalocyanines include commercial phthalocyanine blue dispersions. Non-limiting examples of DPP compounds include DPP Red pigment, which is also known as Pigment Red 254. A preferred red pigment dispersion is Red 254 available from Heubach of Germany and the Sun pigment dispersions. Examples of other red pigments include but are not limited to iron oxide red inorganic pigments, quinacridones 101, 121 & violet 19 and azo-diazo compounds. It is believed that other red pigments such as perylene red 178, 179, and 149; and other perylene compounds would exhibit similar laser absorbing properties. Additional examples of suitable coloring agents include but are not limited to green pigments; blue pigments such as indanthrene blue 60, inorganic pigment cobalt aluminate (blue), idigio blue, ultramarine blues, complex colored inorganic pigment blues (CCIP), and phalthalocyanine blue available from Heubach of Germany; orange pigments such as orange 119, DPP orange 73, pigment orange 67, inorganic orange pigment cerium sulfide, and combinations thereof; and yellow pigments such as isoindoline yellow, complex inorganic yellow pigment, bismuth vanadate, zinc ferrite, and combinations thereof. Representative examples of green pigments include phalthalocyanine green, chrome greens, cobalt greens, complex inorganic greens, and combinations thereof. The previously noted commercially available Red 254 and phalthalocyanine blue both available from Heubach, are used by formulating with a solvent (such as water or an organic component), one or more pigments, and a surface active agent to aid in particle size reduction and dispersion stability.

As described herein, it is generally preferred that the coloring agent(s) used in the marking compositions be in the form of pigments. As will be understood by those skilled in the art, pigments change color of reflected or transmitted light as a result of wavelength-selective absorption. Although pigments are preferred, it is also contemplated that the coloring agent(s) could include fluorescence agents, phosphorescence agents, luminescence agents, and combinations thereof. Furthermore, the coloring agent(s) could also include one or more dye(s) so long as prior to laser irradiation, the dye(s) precipitated from solution and formed particulates that could then become embedded or at least partially so, in the substrate of interest.

Preferably, the coloring agent(s) is in the form of particulates and has a relatively small average particle size. For example, for certain applications, it is preferred that the average particle size for coloring agent(s) in particulate form be from about 0.1 micron to about 100 microns, and more preferably from about 1 micron to about 10 microns.

Various pigments are commercially available and can be used in the preferred embodiment compositions. For example, a pearl mica effect pigment is available from Engelhard-BASF under the designation MEARLIN DYNACOLOR RB9639ZV19A. It will be appreciated that the invention includes a wide array of other commercially available pigments and coloring agents.

### Surfactant or Dispersant

The surfactant or dispersant aids in coating the coloring agent(s) and prevents the particles from coalescing or clumping. If the particles are subjected to a particle size reduction operation, the dispersant can be added during size reduction to prevent the particles from aggregating together to form larger bodies.

Examples of preferred surfactant/dispersants include but are not limited to SOLSPERSE 40,000 and SILCO-SPERSE HLD 5/k available from Lubrizol Corporation of Wickliffe, Ohio. Other examples of a preferred dispersant are those available under the designation DISPARLON available from King Industries, Inc. of Norwalk, CT. These are commercially available materials or formulations. Generally, any surface active dispersant, silicon based dispersant, etc., may be suitable for use in the preferred embodiment compositions. Non-polymeric and polymeric surface active dispersants, surfactants or agents can be incorporated into the formula.

### Solvent

The preferred embodiment compositions also comprise one or more solvents. Preferably, the solvents are water or other aqueous-based solvents, or one or more organic solvents. If water is selected as the solvent, preferably, the water is purified water. Examples of preferred types of purified water include but are not limited to distilled water and de-ionized (DI) water.

Non-limiting examples of other aqueous solvents include alcohols such as ethanol.

Non-limiting examples of organic solvents include ketones, alkanes such as butane (such as if in liquid form as a result of pressurization such as may be used for spray applications), and aromatic organic solvents such as xylenes.

### No Absorbers or Enhancers

A feature of the present invention is that light absorbers or "enhancers" are not required by the preferred embodiment compositions. This is in contrast to descriptions in the prior art of compositions containing certain organic compounds in combination with light absorbers or enhancers, which are applied to surfaces for subsequent exposure to laser radiation, as described in US patents 6,924,077 and 6,855,910. Thus, the preferred embodiment compositions are free of light absorbers and light adsorption enhancers.

Many if not all light absorbers or enhancers are relatively expensive or exotic agents. Requiring their use in a marking composition is undesirable due to the additional costs. Furthermore, certain absorbers or enhancers may have poor stability and so may necessitate special processing and/or storage methods. In addition, certain light absorbers or enhancers may have compatibility problems with the surface to be marked. This issue may become particularly problematic if the same composition is used for marking multiple surfaces, each differing in composition. Upon application of the marking composition, the stability of the light absorber or enhancer may be comprised due to the incompatibility. Moreover, requiring absorbers or enhancers in a marking composition introduces additional handling and processing concerns associated with the marking composition.

Certain absorbers or enhancers are in the form of glass frit or based upon glass-like materials. The inclusion of such particles in a marking composition may limit use of the composition. For example, depending upon the substrate to be marked, the desired characteristics of the mark, and the operating parameters of the laser, the presence of glass frit may render the marking composition unsuitable for certain applications.

Accordingly, a significant feature of the invention is that the marking compositions are free of light absorbers or enhancers as are typically used in known marking compositions.

### No Polymeric Carrier

Another feature of the present invention is that the preferred embodiment compositions are free from polymeric carrier(s). Marking compositions are known in the art which utilize polymeric carriers. Upon exposure to laser irradiation, such polymeric carriers are cured to the surface of the substrate undergoing marking. The presence of polymeric carriers in a marking composition is undesirable because they interfere with the agent(s) that are responsible for forming the visible marks. In accordance with the present invention, it has been discovered that marks with superior sharpness, contrast, and aesthetic qualities can be produced from marking compositions as described herein that are free of polymeric carrier(s).

### Surface to be Laser Marked

The polymeric surface to be marked can be smooth, textured, clear, opaque, or translucent. The characteristics of the surface generally do not matter because the coloring agent(s) of the preferred embodiment compositions is the sole and exclusive component which absorbs energy during laser irradiation. Generally, it is contemplated that nearly any surface can be marked using the compositions and methods described herein. Non-limiting examples of such surfaces include a wide array of coatings, powder coatings, and substrates. As noted, the surface is preferably polymeric and so representative examples of polymeric substrates include polypropylene.

### Lasers

A wide array of lasers can be used in the present invention. Preferred lasers are those known as CO₂ lasers and fiber lasers.

A CO₂ laser produces a beam of infrared light with the principal wavelength bands centering around 9.4 and 10.6 micrometers. CO₂ lasers are available commercially from numerous sources. A preferred CO₂ laser is a 40 watt Universal M35 CO₂ laser with a 10 micron wavelength.

A fiber laser is a laser in which the active gain medium is an optical fiber doped with rare-earth elements such as erbium, ytterbium, neodymium, dysprosium, praseodymium, and thulium. They are related to doped fiber amplifiers, which provide light amplification without lasing. Fiber lasers are also commercially available from numerous sources. A preferred fiber laser is a 10 watt Paragon continuous wave fiber laser with a 1 micron wavelength.

Generally, the intensity of the laser and the particular wavelength or range of wavelength(s) are selected based upon the characteristics of the composition and the polymeric surface to be laser marked. Typical settings for a 40 watt CO₂ laser for plastics and coating polymers is from about 10% to about 20% of full power at 60 to 20 speeds. For most coatings, a power level of 5 to 10% and 30 to 15 speed settings are used. A 10 watt fiber laser can be used at 10 to 100 speeds and the power can be from about 1 to about 10 watts. When using a marking composition containing a DPP Red 254 dispersion, on polypropylene, suitable markings can be formed using a laser set at 5 to 10% full power with a speed setting of 10 to 50 inches per minute. The term "speed" as used herein refers to the velocity of the marking head as it moves across the surface being lased. When using a marking composition containing phthalocyanine blue, suitable markings on polypropylene can be made using a laser set at 5 to 10% of full power with a speed setting of 10 to 50 inches per minute. The marking conditions will vary from one laser to another and achieving a mark is not limited to a particular laser. Changing to a higher or lower watt laser would change the marking parameters, and so one could mark at a lower % power and faster speed or vise versa. The particular combination of power setting, marking speed, and other parameters for the laser of interest can be determined by empirical testing to identify the optimum settings.

The actual power levels as measured at the surface to be marked are slightly less than the power as measured of the laser as delivered. For example, for a 40 watt CO₂ laser, the power level at the surface can measure from slightly above the rated power, such as about 42 watts, to about 35 watts or less. As will be appreciated, this is primarily due to the efficiency of the laser tube. A wide array of other lasers can be used such as YAG pulsed lasers, green lasers, red lasers, UV laser and others.

### Methods

The various preferred methods of the invention enable formation of high contrast or dark marks on a polymeric surface. High-contrast marks or dark marks, for the purposes of this disclosure, means marks that are visible to the human eye, and/or machine readable, and are darker than the surrounding material. For example, a high-contrast or dark mark may appear in a transparent polymer material to be a black, brown, purple, blue, green or other high-contrast, dark or colored mark. A dark color that produces a light colored mark is also possible with laser energy.

Generally, the preferred embodiment methods involve applying a preferred composition onto a polymeric surface to be marked to form a coating of the composition, selectively irradiating portions of the coating with a source of high energy light such as a laser to thereby produce desired marks in the surface. After formation of the marks, it is generally preferred to remove any remaining coating, such as by simply wiping away.

The preferred compositions are in liquid form and can be applied to the surface of interest in nearly any fashion. Generally, the compositions are sprayed, however dripping, pouring, and other liquid administration techniques can be used. The color dispersion can be sprayed on to a film and then transferred into the polymer by applying laser energy to the dried dispersion on film. Administering the dispersion on to the film by dipping and pouring could be used to perform the same application as spraying. In the event that the composition is sprayed or otherwise applied to a receiving surface via droplets or microdroplets, one or more propellants such as butane could be used either partially or entirely as the solvent component of the composition.

The thickness of the resulting coating can be adjusted and/or controlled by the use of viscosity agents in the composition, control of temperature, and using optional treatments or pre-coatings on the surface to be marked. Depending upon the concentration of the coloring agent(s) in the composition, and other factors, adjustment of the coating thickness can be used to at least partially control contrast or darkness of the markings. Typically, thickness will vary depending upon coating chemistry and heat stability.

After formation of a coating of the composition on the surface of interest, the coating and underlying surface is selectively irradiated with the noted source of energy, which is preferably a laser. The term "selective irradiating" refers to directing laser energy to only particular localized regions of the coating and underlying surface. These regions correspond to the shape and outline of the desired marks. The laser is preferably operated as previously described, i.e. at the noted power levels and speeds. The distance of the laser source from the surface to be marked varies depending upon the focal length of the laser beam. Typically, one or more lenses can be used to focus the laser beam at 1.5, 2, and 4 inches from the surface for example. For many marking applications, a distance of about 1.5 inches between the lens and the surface to be marked is appropriate for a CO₂ laser as described herein.

As previously explained, and although not wishing to be bound to any particular theory, it is believed that exposure to relatively high laser energy results in the particulate coloring agent(s) increasing in temperature. Regions of polymer in the surface targeted for marking adjacent the particulate agent(s), are then heated to a temperature above their softening point and preferably above their melting point. Flowable polymer then envelopes or at least partially surrounds the hot particulates and upon cooling, then retains the particulate coloring agents, thereby importing a colored or darkened appearance along the surface in the select regions of laser irradiation. Use of relatively small particulates also increases the overall surface area of the particulates and thereby increases the extent of energy absorption. Furthermore, reducing particle size increases the ratio of surface area to mass for a given particle. Particles having high ratios of surface area to particle mass can be heated faster and thus exhibit quicker temperature increases upon exposure to laser energy as compared to larger particles having reduced ratios of surface area to mass.

Another preferred technique for laser marking involves applying the marking composition to a transfer member, a tape or other flexible substrate, allowing the composition to dry, and then contacting the dried composition to the surface to be laser marked. A laser is then directed to the tape whereby the laser energy causes the marking composition to mark or otherwise embed all or a portion of the coloring agent(s) within the surface undergoing marking. The tape can be transparent, opaque, or translucent. Preferably, a face of the tape includes pressure sensitive adhesive for retaining the tape containing dried marking composition onto and against the surface to be marked.

It is not necessary that a tape or adhesive-carrying film be used. Instead, it is contemplated that nearly any single or multiple film could be used so long as the film does not interfere with the marking composition upon application thereto, and laser energy can penetrate the thickness of the film to reach the marking composition and cause marking on the surface of interest.

After laser marking and formation of desired marks on the surface of interest, any remaining or excess composition is preferably removed.

A preferred method in accordance with the invention utilizes a preferred embodiment composition applied to form a layer or coating on a polymeric surface to be marked. The method also involves appropriate selection and operation of a laser whereby laser light partially passes through the layer or coating and specifically through the pigment particle layer, without an excessive amount of energy absorption by the coloring agent(s) that would destroy or detrimentally affect the coloring agent(s). At least a portion of the laser light passes through the layer or coating and penetrates into the underlying polymeric surface whereby the light and its associated energy are absorbed by the polymeric material within at least a region underlying the coating or layer, thereby causing an increase in temperature of the polymeric material above the glass transition temperature of the polymeric material and preferably above the melting point of the polymeric material within the noted region. The increase in temperature of the polymeric material within the noted region causes the polymeric material to melt and at least partially flow and thus encapsulate and/or create a strong bond between the coloring agent(s) and the polymeric material.

Generally, in accordance with this preferred method, the laser is selected and/or operated to emit light of an appropriate wavelength and energy level. Typical laser configurations are as described herein.

In yet another preferred method in accordance with the invention, a composition comprising the previously noted functionalized pigment is utilized and the laser is configured or operated such that during the laser marking operation, the polymer material is sufficiently melted to a low viscosity flowable state. The flowable polymer material mixes or at least partially blends with the functionalized pigment to thereby form in-situ, a dispersion of the polymeric material in a flowable state having a relatively high loading or proportion of pigment. Typical weight ratios of pigment to polymeric material (within the region of melted polymer material) range from about 0.25% to about 90%, and preferably range from about 5% to about 80%. Upon irradiation by the laser, the polymer material is sufficiently heated such that the material exhibits a viscosity of from about 0.25 cps to about 50,000 cps, and preferably from about 0.5 cps to about 10,000 cps.

Regarding the previously described aspects, it is contemplated that use of compositions free from energy absorbing components is particularly preferred. This allows laser light to at least partially pass through the composition containing coloring agent(s) and/or pigment without the composition absorbing an excessive amount of light energy. The laser light can then pass through the composition and penetrate into the underlying polymeric material of the polymer surface to be marked. Preferably, the laser light, upon penetration into the polymeric material, increases the temperature of the polymeric material such that the material melts and at least partially flows. This significantly improves bonding along the interface of the composition and the polymeric material. In the event that the composition contained one or more components that excessively absorbed energy from the laser light, the pigment and/or coloring agent would undergo thermal degradation as a result of the ensuing temperature increase of the composition.

Although not wishing to be bound to any particular theory, it is also believed that particle size of the coloring agent(s) and/or pigment in the composition is also important. By appropriate selection of particle size, laser light is sufficiently scattered or otherwise disrupted to heat the pigment without thermal degradation while allowing enough laser light to penetrate the underlying polymeric material and heat that material preferably to a flowable state.

Furthermore, and without being bound to any particular theory, it is also believed that the preferred embodiment compositions which comprise surfactant impart or at least promote the previously described functionalized surface for pigment particles. The functionalized pigment surface is then able to efficiently wet and enable the pigment particles to migrate into the underlying polymeric material, which is flowable as a result from heating by the laser light. This phenomenon enables the in-situ formation of a highly loaded region of pigment and polymeric material. In a particularly preferred aspect, it is also preferred that the composition used in forming these highly loaded regions, is free of a polymeric carrier. That is, use of a composition comprising pigment and preferably functionalized pigment, and free of a polymeric carrier, enables the highly loaded pigment to more effectively wet the low viscosity flowable and heated polymeric material.

### Examples

### Example 1

A preferred composition according to the present invention was formed by combining 12 grams SOLSPERSE 40,000 (dispersant), 10 grams DPP Pigment Red 254, and 20 grams water. Another preferred composition according to the invention was formed by combining 5 grams SILCO-SPERSE HLD 5/K (dispersant), 25 grams water, and 15 grams DPP Pigment Red 254.

Prior to forming the compositions, the pigment was mixed and subjected to a particle size reduction operation for 30 minutes on a SKANDEX shaker using glass beads. The glass beads were then filtered from the resulting pigment dispersion. The preferred compositions were sprayed uniformly onto various plastic and coated surfaces. The coated surfaces were then laser marked with CO₂ and fiber lasers. Any excess overspray was wiped off the laser marked surface with water.

Additional examples illustrating other compositions applied to various polymeric surfaces followed by laser marking are as follows.

### Example 2

An organic phthalocyanine blue dispersion was applied on polypropylene. The coated surface was then selectively irradiated using a fiber laser to form high contrast marks.

### Example 3

An organic Pigment Red 254 dispersion was applied on an acrylic molded chip. The coated chip was then marked using a fiber laser.

### Example 4

An organic phthalocyanine blue dispersion was applied on a two component polyurethane coating. The coated polyurethane surface was then marked using a CO₂ laser and a fiber laser.

### Example 5

An organic Pigment Red 254 dispersion was applied on a two component polyurethane coating. The polyurethane surface was then marked using a CO₂ laser.

### Example 6

Organic Pigment Red 254, SOLSPERSE 40,000, and water were combined to form a dispersion. The dispersion was applied to a polyurethane coating and molded polypropylene. The coated surface was then irradiated with CO₂ and fiber lasers. High contrast marks were produced.

### Example 7

Organic Red 254, silicone dispersant, and water were combined to form a dispersion. The dispersion was applied to a polyurethane coating and molded polypropylene. The coated surface was then exposed to CO₂ and fiber lasers. High contrast marks were produced.

### Example 8

An organic phthalocyanine blue dispersion was applied on an acrylic molded chip. The coated chip was then selectively irradiated using a CO₂ laser to form markings.

### Example 9

A pigment/dispersant/water composition as described herein could also be sprayed on a tape or film. The coated tape could then be applied to a plastic surface and irradiated. Upon laser marking, color is transferred into the surface of the polymer.

### Example 10

An organic Pigment Red 254 dispersion was applied on molded nylon. Various laser markings were formed using a CO₂ laser.

### Example 11

Another composition according to the invention was prepared by combining 25 grams of ethanol as a solvent, 0.5 grams of DISPARLON AQ-200, and 25 grams of cobalt aluminate pigment. Fiber and CO₂ laser marks were formed using this composition.

### Example 12

Another composition suitable for forming metallic effects was prepared by using the composition noted in Example 11 but replacing the cobalt aluminate pigment with pigment(s) typically used for metallic effects.

### Example 13

A composition for forming a pearl mica effect upon a polypropylene substrate was formed by combining 10 grams of MEARLIN DYNACOLOR RB9639ZV19A from Engelhard-BASF, 25 grams of ethanol, and 0.5 grams of DISPARLON AQ-200. The composition was applied to a polymeric surface to be marked. The substrate and composition applied thereon was then selectively irradiated with light from a 40 watt CO₂ laser. The laser marked substrate exhibited an iridescent pearl effect.

### Example 14

In this example, laser marking using a tape carrier was performed. A marking composition containing DPP Pigment Red 254, dispersant and water was prepared. The marking composition was then sprayed onto a tape and allowed to dry. Once dry, the face of the tape containing the marking composition was contacted with a plastic surface, such as a plastic chip. A fiber laser was then directed to the tape covered face of the plastic surface to thereby laser mark the plastic surface. The tape was then removed from the plastic surface. A high contrast mark was formed from the pigment particles having been embedded into the plastic surface by the laser energy.

Many other benefits will no doubt become apparent from future application and development of this technology.

All patents, published applications, and articles noted herein are hereby incorporated by reference in their entirety.

It will be understood that any one or more feature or component of one embodiment described herein can be combined with one or more other features or components of another embodiment. Thus, the present invention includes any and all combinations of components or features of the embodiments described herein.

As described hereinabove, the present invention solves many problems associated with previous practices and compositions. However, it will be appreciated that various changes in the details, materials and arrangements of components, which have been herein described and illustrated in order to explain the nature of the invention, may be made by those skilled in the art without departing from the principle and scope of the invention, as expressed in the appended claims.

## Claims

1. A composition for forming marks or indicia of at least one coloring agent in particulate form encapsulated and retained in a polymeric surface upon laser irradiation, the composition comprising:
solvent;
at least one coloring agent in particulate form;
at least one agent selected from the group consisting of a surfactant, a dispersant, and combinations thereof;
wherein the composition is free of both (i) a light absorber or light adsorption enhancer, and (ii) a polymeric carrier.

2. The composition of claim 1 wherein the solvent is water.

3. The composition of claim 2 wherein the composition comprises:
from about 35% to about 65% water;
from about 2% to about 40% coloring agent; and
from about 0.1 % to about 35% of surfactant/dispersant.

4. The composition of claim 1 wherein the coloring agent particles have an average particle size of from about 0.1 micron to about 100 microns.

5. The composition of claim 1 wherein the coloring agent is selected from the group consisting of organic pigments, inorganic pigments, mica effect pigments, metallic effect pigments, and combinations thereof.

6. A method of forming a mark, indicia, text, or design on a polymeric surface, the method comprising:
providing a composition free of both (i) a light absorber or light adsorption enhancer, and (ii) a polymeric carrier, the composition including solvent, at least one coloring agent in particulate form, and at least one agent selected from the group consisting of a surfactant, a dispersant, and combinations thereof;
applying the composition to a polymeric surface to form a coating;
irradiating at least a portion of the coating with laser light such that regions of the polymeric surface underlying the coating increase in temperature and at least partially encapsulate and retain the coloring agent particles,
wherein irradiating does not cause thermal degradation of the coloring agent particles.

7. The method of claim 6 wherein the solvent is water.

8. The method of claim 7 wherein the composition comprises from about 35% to about 65% water; from about 2% to about 40% coloring agent; and from about 0.1 % to about 35% of surfactant/dispersant.

9. The method of claim 8 wherein the coloring agent particles have an average particle size of from about 0.1 micron to about 100 microns.

10. The method of claim 6 wherein the applying operation includes:
providing a transfer member defining a first face, and an oppositely directed second face;
applying the composition to the first face of the transfer member to form a coating;
drying the coating;
contacting the dried coating to the surface to be marked.

11. The method of claim 6 wherein the laser light is of a wavelength and energy level such that at least a portion of the laser light passes through the coating and penetrates into the polymeric surface within at least a region underlying the coating thereby causing an increase in temperature of the polymeric surface so that at least a portion of the coloring agent particles in the composition are at least partially encapsulated and retained within the polymeric surface.

12. The method of claim 11 wherein the increase in temperature of the polymeric surface is to a temperature greater than the glass transition temperature of the polymeric surface.

13. The method of claim 12 wherein the increase in temperature of the polymeric surface is to a temperature greater than the melting point of the polymeric surface.

14. The method of claim 6 wherein the coloring agent is a functionalized pigment.

15. A method of forming in-situ, a dispersion of polymeric material and functionalized pigment particles, the method comprising:
providing a composition free of both (i) a light absorber or light adsorption enhancer and (ii) a polymeric carrier, the composition including functionalized pigment particles;
forming a layer or coating of the composition on a surface of a polymeric material;
directing light emitted from a laser onto the layer of the composition whereby at least a portion of the light passes through the layer of the composition and penetrates into the polymeric material within at least a region underlying the layer of the composition thereby causing an increase in temperature of the polymeric material such that the polymeric material has a viscosity of from about 0.25 cps to about 50,000 cps, to thereby form a flowable portion of the polymeric material;
allowing at least a portion of the functionalized pigment particles to disperse within the flowable portion of the polymeric material to thereby form in-situ a dispersion of polymeric material and functionalized pigment particles.

## Patentansprüche

1. Zusammensetzung zur Bildung von Markierungen oder Abdrucken mit wenigstens einem Farbstoff in Partikelform, der bei Laserbestrahlung in einer polymeren Oberfläche eingekapselt und gespeichert wird, wobei die Zusammensetzung aufweist:
Lösemittel;
zumindest einen Farbstoff in Partikelform;
zumindest einen Stoff, der ausgewählt ist aus der Gruppe, die aus einem Tensid, einem Dispersionsmittel und Kombinationen daraus besteht;
wobei die Zusammensetzung sowohl frei von (i) einem Lichtabsorber oder einem Licht-Adsorptionsverstärker als auch von (ii) einem polymeren Träger ist.

2. Zusammensetzung gemäß Anspruch 1, wobei das Lösemittel Wasser ist.

3. Zusammensetzung gemäß Anspruch 2, wobei die Zusammensetzung aufweist;
von ungefähr 35% bis ungefähr 65% Wasser;
von ungefähr 2% bis ungefähr 40% Farbstoff; und
von ungefähr 0,1% bis ungefähr 35% ein Tensid/Dispersionsmittel.

4. Zusammensetzung gemäß Anspruch 1, wobei die Farbstoffpartikel eine durchschnittliche Partikelgröße von ungefähr 0,1 Mikrometer bis ungefähr 100 Mikrometer aufweisen.

5. Zusammensetzung gemäß Anspruch 1, wobei der Farbstoff ausgewählt ist aus der Gruppe, die aus organischen Pigmenten, anorganischen Pigmenten, Glimmereffekt-Pigmenten, Metalleffekt-Pigmenten und Kombinationen daraus besteht.

6. Verfahren zur Bildung einer Markierung, eines Abdrucks, eines Texts oder Musters auf einer Polymeroberfläche, wobei das Verfahren aufweist:
Bereitstellen einer Zusammensetzung, die sowohl frei von (i) einem Lichtabsorber oder einem Licht-Adsorptionsverstärker als auch von (ii) einem polymeren Träger ist, wobei die Zusammensetzung ein Lösemittel, zumindest einen Farbstoff in Partikelform und zumindest einen Stoff aufweist, der ausgewählt ist aus der Gruppe, die aus einem Tensid, einem Dispersionsmittel und Kombinationen daraus besteht;
Aufbringen der Zusammensetzung auf eine polymere Oberfläche zur Bildung einer Beschichtung;
Bestrahlung von zumindest einem Bereich der Beschichtung mit Laserlicht, so dass Bereiche der polymeren Oberfläche, die unter der Beschichtung liegen, in der Temperatur ansteigen und zumindest teilweise die Farbstoffpartikel einkapseln und speichern,
wobei die Bestrahlung keinen thermischen Abbau der Farbstoffpartikel bewirkt.

7. Verfahren gemäß Anspruch 6, wobei das Lösemittel Wasser ist.

8. Verfahren gemäß Anspruch 7, wobei die Zusammensetzung von ungefähr 35% bis ungefähr 65% Wasser; von ungefähr 2% bis ungefähr 40% Farbstoff; und von ungefähr 0,1% bis ungefähr 35% ein Tensid/Dispersionsmittel aufweist.

9. Verfahren gemäß Anspruch 8, wobei die Farbstoffpartikel eine durchschnittliche Partikelgröße von ungefähr 0,1 Mikrometer bis ungefähr 100 Mikrometer aufweisen.

10. Verfahren gemäß Anspruch 6, wobei der Vorgang des Aufbringens umfasst:
Bereitstellen eines Übertragungselementes, das eine erste Fläche und eine gegenüberliegende zweite Fläche definiert;
Aufbringen der Zusammensetzung auf die erste Fläche des Übertragungselementes zur Bildung einer Beschichtung;
Trocknen der Beschichtung;
In Kontakt Bringen der getrockneten Beschichtung mit der zu markierenden Oberfläche.

11. Verfahren gemäß Anspruch 6, wobei das Laserlicht eine derartige Wellenlänge und ein derartiges Energieniveau aufweist, dass zumindest ein Teil des Laserlichts durch die Beschichtung strahlt und in die polymere Oberfläche innerhalb wenigstens eines unter der Beschichtung liegenden Bereiches eindringt, wodurch ein Anstieg der Temperatur der polymeren Oberfläche derart bewirkt wird, dass zumindest ein Teil der Farbstoffpartikel in der Zusammensetzung wenigstens teilweise innerhalb der polymeren Oberfläche eingekapselt und gespeichert werden.

12. Verfahren gemäß Anspruch 11, wobei der Temperaturanstieg in der polymeren Oberfläche bis zu einer Temperatur stattfindet, die höher ist als die Glasübergangstemperatur der polymeren Oberfläche.

13. Verfahren gemäß Anspruch 12, wobei der Temperaturanstieg in der polymeren Oberfläche bis zu einer Temperatur stattfindet, die höher ist als der Schmelzpunkt der polymeren Oberfläche.

14. Verfahren gemäß Anspruch 6, wobei der Farbstoff ein funktionalisiertes Pigment ist.

15. Verfahren zur in-situ-Bildung einer Dispersion aus polymerem Material und funktionalisierten Pigmentpartikeln, wobei das Verfahren aufweist:
Bereitstelleneiner Zusammensetzung, die sowohl frei von (i) einem Lichtabsorber oder einem Licht-Adsorptionsverstärker als auch von (ii) einem polymeren Träger ist, wobei die Zusammensetzung funktionalisierte Pigmentpartikel aufweist;
Bildung einer Schicht oder Beschichtung aus der Zusammensetzung auf einer Oberfläche eines polymeren Materials;
Richten von aus einem Laser abgestrahlten Licht auf die Schicht aus der Zusammensetzung, wodurch zumindest ein Teil des Lichtes durch die Schicht aus der Zusammensetzung strahlt und in die polymere Oberfläche innerhalb wenigstens eines unter der Schicht der Zusammensetzung liegenden Bereiches eindringt, wodurch ein Anstieg der Temperatur der polymeren Oberfläche derart bewirkt wird, dass das polymere Material eine Viskosität von ungefähr 0,25 cps bis 50.000 cps aufweist, um so einen fließfähigen Teil des polymeren Materials zu bilden;
Ermöglichen, dass zumindest ein Teil der funktionalisierten Pigmentpartikel innerhalb des fließfähigem Teils des polymeren Materials dispergiert, um dadurch in-situ eine Dispersion aus polymerem Material und funktionalisierten Pigmentpartikeln zu bilden.

## Revendications

1. Composition pour former des marques ou des impressions par un agent colorant en forme de particules, qui est encapsulé et retenu dans une surface polymérique à l'irradiation par laser, la composition comprenant :
du solvant ;
au moins un agent colorant en forme de particules ;
au moins un agent sélectionné dans le groupe composé d'un tensioactif, d'un dispersant et des combinaisons de ceux-ci ;
dans lequel la composition ne contient ni (i) un absorbeur de lumière ou un intensificateur d'adsorption de lumière ni (ii) un support polymère.

2. Composition selon la revendication 1, dans laquelle le solvant est de l'eau.

3. Composition selon la revendication 2, dans laquelle la composition comprend :
d'environ 35% à environ 65% d'eau ;
d'environ 2% à environ 40% d'un agent colorant ; et
d'environ 0,1% à environ 35% d'un tensioactif/dispersant.

4. Composition selon la revendication 1, dans laquelle les particules d'agent colorant ont une taille de particule moyenne comprise entre environ 0,1 micromètres et environ 100 micromètres.

5. Composition selon la revendication 1, dans laquelle l'agent colorant est sélectionné dans le groupe composé de pigments organiques, de pigments inorganiques, de pigments d'effet mica, de pigments d'effet métallique et de combinaisons de ceux-ci.

6. Procédé de formation d'une marque, d'une impression, d'un texte ou d'un dessin sur une surface polymère, le procédé comprenant les étapes de :
fournir une composition, qui ne contient ni (i) un absorbeur de lumière ou un intensificateur d'adsorption de lumière ni (ii) un support polymère, la composition comprenant un solvant, au moins un agent colorant en forme de particules et au moins un agent sélectionné dans le groupe composé d'un tensioactif, d'un dispersant et des combinaisons de ceux-ci ;
appliquer la composition sur une surface polymère pour former un revêtement;
irradier au moins une partie du revêtement avec de la lumière laser de sorte que des régions de la surface polymère, qui se trouvent au-dessous du revêtement, subissent une augmentation de la température et encapsulent et retiennent au moins partiellement les particules d'agent colorant,
dans lequel l'irradiation ne cause pas de dégradation thermique des particules d'agent colorant.

7. Procédé selon la revendication 6, dans lequel le solvant est de l'eau.

8. Procédé selon la revendication 7, dans lequel la composition comprend d'environ 35% à environ 65% d'eau, d'environ 2% à environ 40% d'agent colorant et d'environ 0,1% à environ 35% de tensioactif/dispersant.

9. Procédé selon la revendication 8, dans lequel les particules d'agent colorant ont une taille de particule moyenne comprise entre environ 0,1 micromètres et environ 100 micromètres.

10. Procédé selon la revendication 6, dans lequel l'opération d'application comprend les étapes de :
fournir un élément de transfert, qui définit une première surface et une deuxième surface opposée ;
appliquer la composition sur la première surface de l'élément de transfert pour former un revêtement ;
sécher le revêtement ;
mettre le revêtement séché en contact avec la surface à marquer.

11. Procédé selon la revendication 6, dans lequel la lumière laser comprend une longueur d'onde et un niveau d'énergie de sorte qu'au moins une partie de la lumière laser passe à travers le revêtement et pénètre dans la surface polymère dans au moins une région, qui se trouve au-dessous du revêtement, et provoque ainsi une augmentation de la température de la surface polymère de sorte qu'au moins une partie des particules d'agent colorant dans la composition est au moins partiellement encapsulée et retenue à l'intérieur de la surface polymère.

12. Procédé selon la revendication 11, dans lequel la température de la surface polymère augmente jusqu'à une température supérieure à la température de transition vitreuse de la surface polymère.

13. Procédé selon la revendication 12, dans lequel la température de la surface polymère augmente jusqu'à une température supérieure au point de fusion de la surface polymère.

14. Procédé selon la revendication 6, dans lequel l'agent colorant est un pigment fonctionnalisé.

15. Procédé de formation in-situ d'une dispersion de matériau polymérique et de particules de pigment fonctionnalisé, le procédé comprenant les étapes de :
fournir une composition, qui ne contient ni (i) un absorbeur de lumière ou un intensificateur d'adsorption de lumière ni (ii) un support polymère, la composition comprenant des particules de pigment fonctionnalisé ;
former un couche ou un revêtement à partir de la composition sur une surface d'un matériau polymérique ;
diriger de la lumière émise par un laser sur la couche de composition, faisant ainsi passer au moins une partie de la lumière à travers la couche de composition et pénétrer dans le matériau polymérique à l'intérieur d'au moins une région, qui se trouve au-dessous de la couche de composition, en causant ainsi une augmentation de température du matériau polymérique de sorte que le matériau polymérique a une viscosité comprise entre environ 0,25 cps et environ 50.000 cps pour ainsi former une partie fluide du matériau polymérique ;
permettre à au moins une partie des particules de pigment fonctionnalisé de se disperser dans la partie fluide du matériau polymérique pour ainsi former in-situ une dispersion de matériau polymérique et de particules de pigment fonctionnalisé.
